# EUROPÄISCHE PATENTSCHRIFT

(11) **EP 1 201 014 B1**
(45) Veröffentlichungstag und Bekanntmachung des Hinweises auf die Patenterteilung: **19.03.2003**
(21) Anmeldenummer: 99952399.6
(22) Anmeldetag: 13.08.1999
(51) Int. Cl.: H02G 15/013, H02G 15/113

(54) **UNIVERSALE KABELGARNITUR**
UNIVERSAL CABLE FITTING
MANCHON UNIVERSEL POUR CABLES

(43) Veröffentlichungstag der Anmeldung: 02.05.2002
(73) Patentinhaber: CCS Technology, Inc., Wilmington, DE 19803 (US)
(72) Erfinder: MÜLLER, Thorsten, D-58708 Menden (DE)
(74) Vertreter: Sturm, Christoph, Dipl.-Ing.
(86) Internationale Anmeldenummer: DE9902547
(87) Internationale Veröffentlichungsnummer: WO01013485

(56) Entgegenhaltungen:
- EP-A- 0 219 072
- EP-A- 0 403 937
- EP-A- 0 408 967
- EP-A- 0 538 008
- EP-A- 0 584 616
- EP-A- 0 778 643
- EP-A- 0 923 178
- DE-A- 4 330 294
- US-A- 4 865 893

## Beschreibung

Die Erfindung betrifft eine Kabelgarnitur gemäß dem Oberbegriff des Anspruchs 1.

Auf dem Gebiet der Kabelgarnituren sind sehr viele Anwendungs- und Kombinationsmöglichkeiten und dementsprechend auch sehr viele verschiedene Typen von Kabelgarnituren bekannt. Doch sind diese Kabelgarnituren jeweils nur für einen speziellen Anwendungsfall konzipiert.

So sind beispielsweise Kabelgarnituren aus Halbschalen mit hintereinander liegenden Lamellen in den Dichtungsbereichen bekannt (EP 0 778 643). Eine spezielle Form eines Muffenrohres ist aus US 4,865,893 bekannt. In den Patentschriften US 5,006,669; EP 0 403 937 und EP 0 923 178 werden Kabelmuffen mit Dichtkörpern beschrieben. Eine Anordnung mit Mehrfacheinführungen bei Kabelmuffen ist in der Patentschrift US 5,545,852 dargestellt. Eine Aufteilungsmuffe mit vielen Kabeleinführungen geht aus DE 4 330 294 hervor und in PCT/DE99/01985 wird ein Dichtungskörper für Kabelgarnituren aufgezeigt. Ferner sind bereits Kabelabfangvorrichtungen aus den Patentschriften US 4,752,653 und EP 0 752 747 bekannt. Längsverschlüsse für Kabelgarnituren gehen aus EP 0 780 947 hervor und in PCT/DE99/01945 wird ein Verbindungselement für umlaufende Dichtungen dargestellt.

Die EP 0 408 967 A2 offenbart eine Kabelgarnitur gemäß dem Oberbegriff des Anspruchs 1.

Aus der EP 0 538 008 A2 ist eine Kabelgarnitur bekannt, welche aufweist: ein langgestrecktes Gehäuse aus zwei langgestreckten, der Länge nach an einer Fügestelle zusammengesetzten Gehäuseteilen, in deren freien Stirnrändern Längsnuten zur Aufnahme einer jeweiligen Längsdichtung ausgebildet sind, stirnseitig im Gehäuse angeordnete Verschlußkörper, die über jeweils eine Umlaufdichtung gegen das Gehäuse abgedichtet sind, wobei die Umlaufdichtungen an der Fügestelle mit einem Ansatz versehen sind, der über eine Aussparung in Kontakt mit der zugehörigen Längsdichtung steht.

Aus diesem Stand der Technik geht hervor, daß es sehr verschiedene Muffentypen gibt, bei denen jeweils ein auf die vorliegende Anwendung abgestimmtes Beispiel bestimmend ist.

Durch die Erfindung wird eine Kabelgarnitur der eingangs genannten Art geschaffen, die für den universellen Einsatz geeignet ist und bei der die Abdichtung in den Kreuzungsbereichen von Dichtungen verbessert ist.

Dies wird mit den Merkmalen im kennzeichnenden Teil des Anspruchs 1 gelöst. Vorteilhafte Weiterbildungen der Erfindung sind in den abhängigen Ansprüchen beschrieben.

Gemäß der Erfindung ergibt sich eine einzige Muffenfamilie, aus deren aufeinander abgestimmten Grundbausteinen sich eine beliebige Kombination zusammenstellen läßt.

Bei der Erfindung ist nun von Vorteil, daß eine Kabelgarniturenfamilie alle Anwendungsfälle umfassende Grundbausteine enthält, die alle aufeinander abgestimmt sind und in einem Grundmuffenrohr eingesetzt werden können. Diese grundsätzliche Kabelgarniturenfamilie ist lediglich in verschiedene Typenreihen unterteilt, wobei sich die einzelnen Typenreihen lediglich durch ihren Durchmesser und ggf. durch die Länge des Muffenrohres unterscheiden. Dadurch entsteht ein Gesamtspektrum von Kabelgarnituren, durch das aufgrund der entsprechenden Gestaltung der einzelnen Komponenten eine Vielzahl von Kombinationsmöglichkeiten abgedeckt wird, die alle erdenklichen Anwendungsfälle und Kabelkonfigurationen umfassen. Bei dieser Kabelgarniturenfamilie kann der Aufbau als Durchgangsmuffe wie auch als Haubenmuffe durchgeführt werden, Dadurch entsteht ein durchgängiges Erscheinungsbild und dem Monteur wird dadurch die Arbeit wesentlich erleichtert, da er die Installation an einem ihm vertrauten System durchführt. Er muß sich nicht, wie bisher, bei verschiedenen Anwendungsfällen auf verschiedene Muffenkombinationen einstellen, da ihm bei der erfindungsgemäßen Kabelgarniturenfamilie vertraute Komponenten zur Verfügung gestellt werden.

Die Auswahl einer Kabelgarniturenreihe aus der gesamten Kabelgarniturenfamilie wird bestimmt durch die Art, die Durchmesser und die Anzahl der einzuführenden Kabel sowie durch das erforderliche Spleißvolumen. Im allgemeinen wird das gesamte Anwendungsgebiet mit vier verschiedenen Grunddurchmessern und verschiedenen Längen ausreichend umfaßt, wobei zusätzlich die Länge variieren kann. Außerdem kann die Kabelgarniturenfamilie mit Grundbausteinen im gleichen Umfang wie beim kreisrunden Erscheinungsbild auch bei ovalem Erscheinungsbild durchgeführt werden.

Nachfolgend wird nun die Erfindung anhand von 16 Figuren näher erläutert.
- Figur 1: zeigt ein für die Erfindung signifikantes geteiltes Muffenrohr.
- Figur 2: zeigt eine stirnseitige Ansicht des geteilten Muffenrohrs.
- Figur 3: zeigt die Ausbildung des Längsverschlusses.
- Figur 4: zeigt einen zweigeteilten Dichtkörper.
- Figur 5: zeigt die Ausgestaltung des Dichtkörpers in einer Ansicht auf die Trennebene.
- Figur 6: zeigt die Skizze zu einer Kabelabfangvorrichtung mit Druckplatten.
- Figur 7: zeigt eine Druckplatte für eine Kabelabfangung nach Figur 6.
- Figur 8: zeigt einen zweigeteilten Dichtungskörper mit Ansätzen zum Einhängen einer Kabelabfangvorrichtung.
- Figur 9: zeigt eine Kabelabfangvorrichtung für die Ausführung nach Figur 8.
- Figur 10: zeigt die Skizze eines Dichtkörpers aus zwei Dichtscheiben und einer dazwischen gelagerten elastischen Scheibe.
- Figur 11: zeigt einen Dichtkörper mit Kabeleinführungsstutzen.
- Figur 12: zeigt den Endabschnitt einer umlaufenden Dichtung.
- Figur 13: zeigt ein Verbindungselement für eine geschnittene umlaufende Dichtung.
- Figur 14: zeigt den Einsatz des Verbindungselementes.
- Figur 15: zeigt eine keilförmige Verschlußschiene für den Längsverschluß.
- Figur 16: zeigt für eine ovale Kabelgarniturenreihe der Kabelgamiturenfamilie einen zweigeteilten Dichtungskörper.

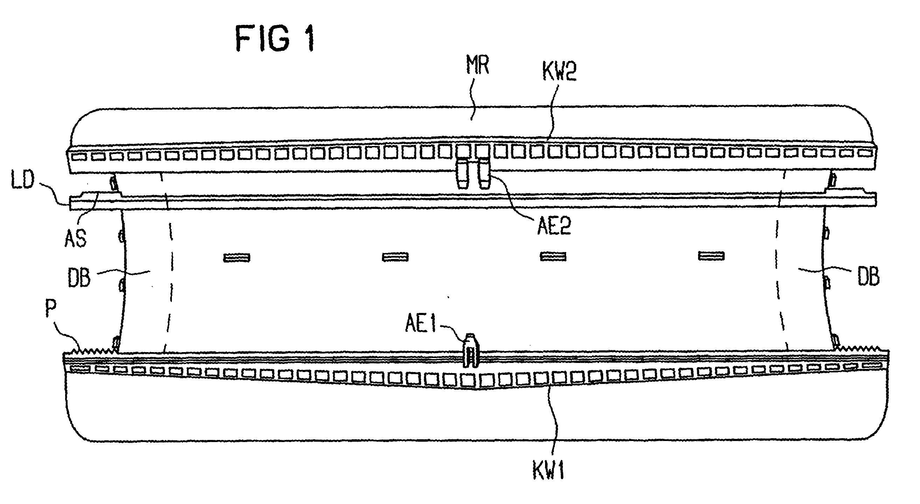

In Figur 1 wird ein Muffenrohr MR dargestellt, das dem Prinzip der Kabelgarniturenfamilie zugrunde gelegt ist. Alle zur Kabelgarniturenfamilie gehörigen Muffenrohre MR sind längsgeschlitzt und haben identische Aufnahmen für Längsdichtungen LD und Verschlußelemente in Form von keilförmigen und hinterschnittenen Klemmwülsten KW1 und KW2 über alle Längen und Durchmesser. Über die Klemmwülste KW1 und KW2 wird beim Verschließen eine angepaßte keilförmige Verschlußschiene aufgezogen. In der Mitte des Muffenrohres MR sind Ausrichtelemente AE1 und AE2 angeordnet, durch die beim Schließen des Muffenrohres MR eine eindeutige Position erreicht wird. Entlang der Längskanten des Muffenrohres MR ist ein Nut-Feder-System angebracht, welches beim Verschließen die Verpressung der Längsdichtung bewirkt. In den Dichtungsbereichen DB des Muffenrohres MR werden beim Zusammenbau die Dichtkörper mit ihren verschiedensten Funktionseinheiten eingesetzt, wobei der Kreuzungsbereich zwischen Längsdichtung und umlaufender Dichtung eine Problemzone darstellt. Aus diesem Grund ist gemäß der Erfindung die hier nicht sichtbare Dichtungsnut nach innen zur umlaufenden Dichtung hin mit einer Aussparung versehen, in die ein Ansatz AS der Längsdichtung LD eintaucht. Durch die Aussparung in der Dichtungsnut und den Ansatz AS in der Längsdichtung LD ist ein direkter Kontakt zu der in der Dichtungsnut des Dichtkörpers befindlichen umlaufenden Dichtung hergestellt. Damit es bei dieser Kreuzung außerdem nicht zu der gefürchteten Zwickelbildung durch verkantetes Aufeinandertreffen der Längskanten des Muffenrohres kommt, weist das Muffenrohr MR im Bereich der Aussparungen entlang der Dichtungsnut verrundete oder gezahnte Profilierungen P auf. Durch die Profilierungen P ergeben sich für den Ansatz AS der Längsdichtung LD Ausweichhohlräume, so daß die Toleranzfälle für Dichtungen in diesem Bereich problemlos erfaßt werden können. Auf diese Weise werden auch die eventuell beim Verschließen des Muffenrohres MR sich ausbildenden längsgerichteten Zwickelräume geschlossen, so daß sich in Längsrichtung eine den Anforderungen gerechte Dichtwirkung erzielen läßt.

Die Längsdichtung LD ist aus einem Silikonprofil hergestellt. Der Vorteil gegenüber bisher üblichen Dichtungen aus geschäumtem Material stellt sich wie folgt dar. Bei den geschäumten Profilen handelt es sich stets um einen geschlossenporigen Schaum. Dieser hat jedoch den Nachteil, daß über die Zeit hinweg bei Belastung die in den Poren eingeschlossene Luft ausdiffundiert, so daß die Dichtung sämtliche Rückstellkräfte verliert. Dadurch geht die Dichtwirkung verloren und es kann zu Undichtigkeiten kommen. Bei dem Silikonprofil gemäß der Erfindung werden jedoch die Rückstellkräfte über die Elastizität des Materials erreicht, die über die Zeit hinweg voll erhalten bleibt. Ein weiterer Nachteil bei der Herstellung der geschäumten Profile ist, daß umweltbelastende Treibmittel verwendet werden.

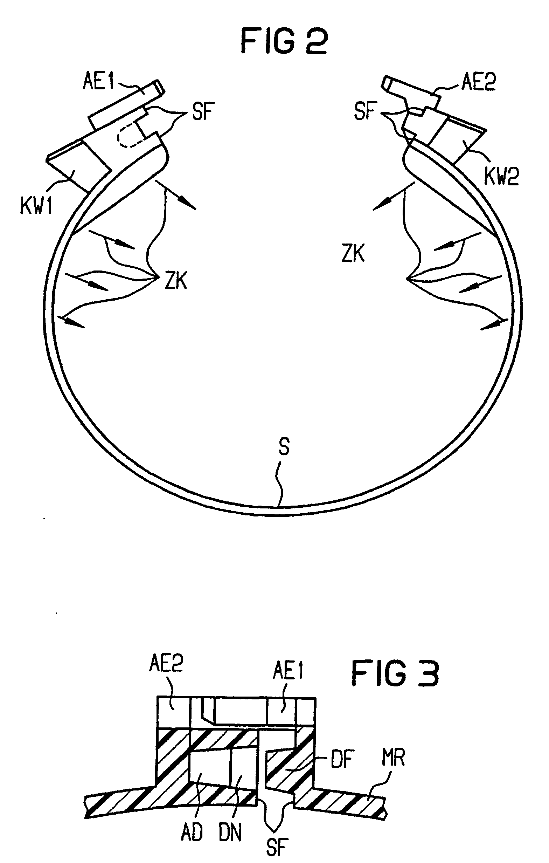

Figur 2 zeigt das der erfindungsgemäßen Kabelgarniturenfamilie zugrunde liegende Muffenrohr MR nach Figur 1 in einer stirnseitigen Ansicht. Dabei ist kennzeichnend, daß die Form des aus thermoplastischem Kunststoff gespritzten Muffenrohres MR in seiner Grundform in geöffnetem Zustand von der Kreisform abweicht. Diese Abweichung von der Kreisform ist durch eine kontinuierlich zunehmende Zusatzkrümmung ZK der freien Schenkel des Muffenrohres MR gekennzeichnet. Die verschieden langen Pfeile der Zusatzkrümmung ZK symbolisieren die Zunahme der nach einwärts gerichteten Zusatzkrümmung, wobei diese zunehmende Zusatzkrümmung ZK von dem der Längsöffnung gegenüber liegenden Scheitelpunkt S nach beiden Richtungen ausgeht. Dies bewirkt, daß beim Schließen des Muffenrohres MR die offenen Längskanten mit ihren Stoßflächen SF im geschlossenen Zustand plan aneinander liegen und im Inneren einen tangentialen Übergang bilden. Dadurch werden erstens die Schließkräfte wesentlich minimiert und zweitens wird dabei garantiert, daß im Inneren des geschlossenen Muffenrohres entlang der längsseitigen Trennungslinie ein tangentialer Übergang gegeben ist. Bei einem rein kreisförmigen Muffenrohr ohne erfindungsgemäße Zusatzkrümmung kommt dieser tangentiale Übergang zunächst nicht zustande, so daß zumindest zunächst im Stoßbereich eine oben bereits beschriebene zwickelförmige Öffnung erhalten bleibt. Erst durch hohen Kraftaufwand an den Verschlußwülsten wird das Einkippen und plane Aneinanderliegen der Stoßflächen erreicht. Die erfindungsgemäße Ausführung erbringt somit eine wesentliche Verbesserung der Dichtungsverhältnisse bei geringerem Kraftaufwand. In dieser Figur sind weiterhin die beiden keilförmig ausgebildeten Klemmwülste KW1 und KW2 zu erkennen, auf denen die Ausrichtelemente AE1 und AE2 überstehen.

Figur 3 vermittelt in einem Querschnitt den Längsverschluß im Stirnbereich des Muffenrohres MR, in dem die Dichtkörper mit ihren verschiedensten Funktionseinheiten eingesetzt werden. Hier ist zu erkennen, daß die eine Längskante eine Dichtungsnut DN und die gegenüberliegende Längskante eine Dichtungsfeder DF aufweist, die beim Verschließen ineinander greifen. In der Dichtungsnut ist weiterhin eine Aussparung AD eingebracht, in die der Ansatz AS der in Figur 1 beschriebenen Längsdichtung LD eingreift. Durch eine korrespondierende, hier nicht gezeigte keilförmige Verschlußschiene werden die Längskanten bis zum Anliegen der Stoßflächen SF zusammengezogen. Dadurch erfolgt die Verpressung der eingelegten Längsdichtung und die Abdichtung des Längsbereiches.

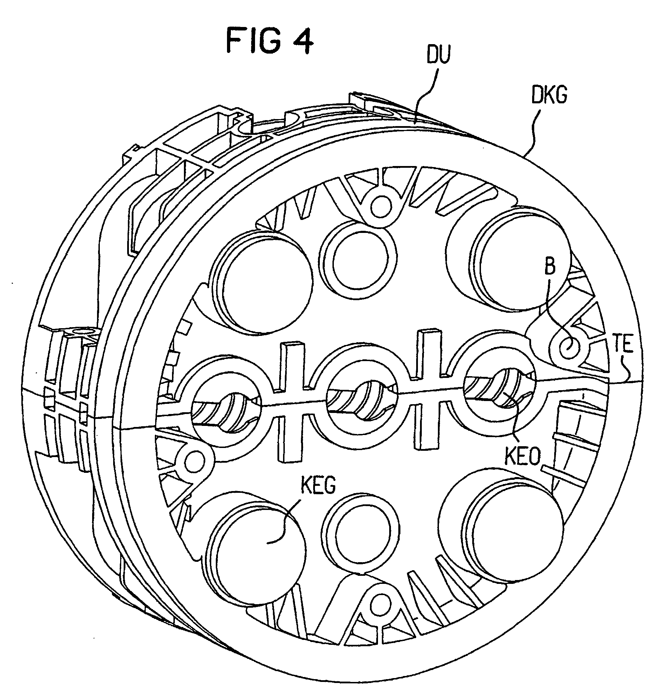

Figur 4 zeigt einen zweigeteilten Dichtkörper DKG aus der Kabelgarniturenfamilie gemäß der Erfindung, bei dem in der Trennebene TE bereits Kabeleinführungsöffnungen KEO eingebracht sind. Durch diese Kabeleinführungsöffnungen KEO können, da sie in der Trennebene TE liegen, ungeschnittene Kabel ein- und ausgeführt werden. Außerdem sind bei diesem Dichtungskörper DKG geschlossene Kabeleinführungsöffnungen KEG angeordnet, die bei Bedarf durch Entfernung des Verschlusses zum Einsatz für geschnittene Kabel geöffnet werden können. Außerdem ist die umlaufende Dichtungsnut DU zu erkennen, in die eine umlaufende Dichtung zur Abdichtung gegen das umgebende Muffenrohr eingelegt wird. Dieser Dichtkörper DKG ist in seinem Außendurchmesser dem Durchmesser einer Kabelgarniturenreihe innerhalb der Kabelgarniturenfamilie angepaßt. Die einzelnen Kabelgarniturreihen unterscheiden sich gegeneinander lediglich durch den Durchmesser, um z.B. den erforderlichen Platzbedarf innerhalb der Kabelgarnitur dem Anwendungsfall anzupassen. Im übrigen gleichen alle Dichtkörper in ihrem Erscheinungsbild, wie auch in den konstruktiven Einzelheiten, so daß sich für den Monteur erhebliche Arbeitserleichterung ergeben. Außerdem können für alle Kabelgarnituren der gesamten Kabelgarniturfamilie die gleichen Werkzeuge und Montagemittel verwendet werden.

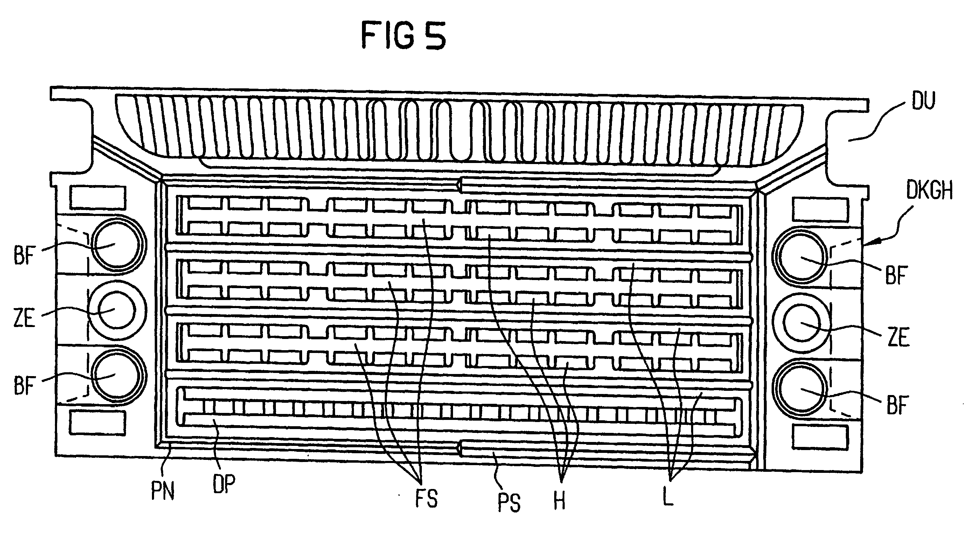

Figur 5 zeigt eine Ansicht auf die Hälfte DKGH des in Figur 4 gezeigten Dichtungskörpers DKG. Aus dieser Darstellung ist zu erkennen, daß der Dichtungskörper und damit auch die Hälfte DKGH des Dichtungskörpers aus in Achsrichtung hintereinander liegenden Lamellen L gebildet wird. In die zwischen den einzelnen Lamellen L befindlichen Hohlräume H werden profilierte Füllscheiben FS eingeführt, um den Abfluß der später eingelegten Dichtungsmasse zu behindern. Aus dieser Darstellung geht weiterhin hervor, daß in der Trennfläche Profilnuten PN eingebracht sind, in die beim Verschließen überschüssige Dichtungsmasse eingedrängt wird. Außerdem sind in dieser Trennebene Profilstege PS angeordnet, durch die zusätzlich eine gegenseitige Justierung der beiden zusammengefügten Hälften DKGH des Dichtungskörpers erfolgt. Weiterhin ist die umlaufende Dichtungsnut DU zu erkennen, in die im zusammengesetzten Zustand eine umlaufende Dichtung zur Abdichtung gegen das Muffenrohr eingelegt wird. In den seitlichen Bereichen der Hälften DKGH des Dichtungskörpers sind Zentriereinheiten ZE angeordnet, die beim Zusammensetzen der beiden Hälften hilfreich sind. Die Verbindung der beiden Hälften DKGH des Dichtungskörpers erfolgt mit Hilfe von Schrauben, die in Befestigungsbohrungen BF eingesetzt und fixiert werden. Es können aber auch für die gegenseitige Befestigung sog. Ejot-Schrauben verwendet werden, die sich in den Kunststoff einschneiden, so daß auf zusätzliche Gewindeelemente verzichtet werden kann.

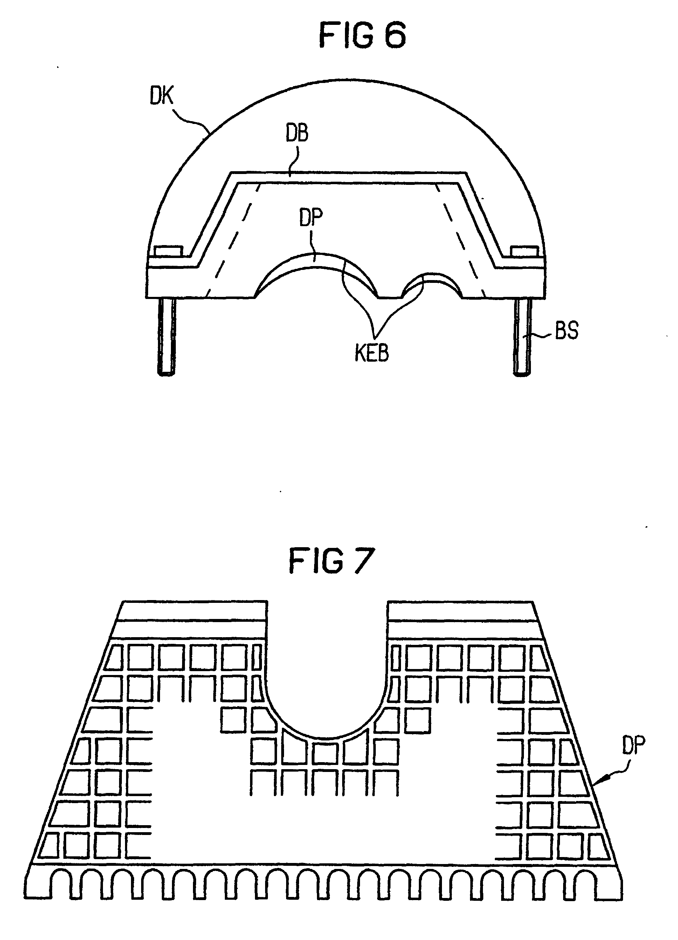

Figur 6 zeigt in einer Skizze einen Dichtkörper DK, bei dem eine Kabelabfangvorrichtung, bestehend aus Dichtplatten DP und einem darauf einwirkenden Druckbügel DB, eingesetzt ist. In diesem Fall werden die Kabeleinführungsöffnungen KEB durch Aufbohren hergestellt und da sie in der Trennebene liegen, können hier auch ungeschnittene Kabel eingeführt werden. Die Druckplatten DP dieser Kabelabfangvorrichtung werden in gegenüberliegenden Hohlräumen zwischen den Lamellen der Dichtungskörperhälften eingefügt und werden in den Einführunsöffnungen ebenfalls entsprechend des Durchmessers der eingeführten Kabel ausgeschnitten. Dabei sind die Durchmesser dieser Ausschnitte geringfügig kleiner als die Kabeleinführungsöffnungen KEB, um eine gewisse Einschnürung des Kabels zu erreichen. Das Aufpressen der Dichtungsplatten DP auf die eingeführten Kabel erfolgt mit Hilfe von Druckbügeln, die beim Justieren der Kabelabfangvorrichtung auf die Dichtplatten mit Hilfe von Befestigungsschrauben BS einwirken.

Die Figur 7 zeigt eine solche Druckplatte DP, die in die Hohlräume zwischen die einzelnen Lamellen der Dichtungskörperhälften eingesetzt werden. Diese Dichtplatten DP weisen Verstärkungsprofile auf, durch die eine erhöhte Steifigkeit erreicht wird. Die Einführungs- bzw. Klemmöffnungen werden entsprechend Figur 6 bei der Montage eingebracht.

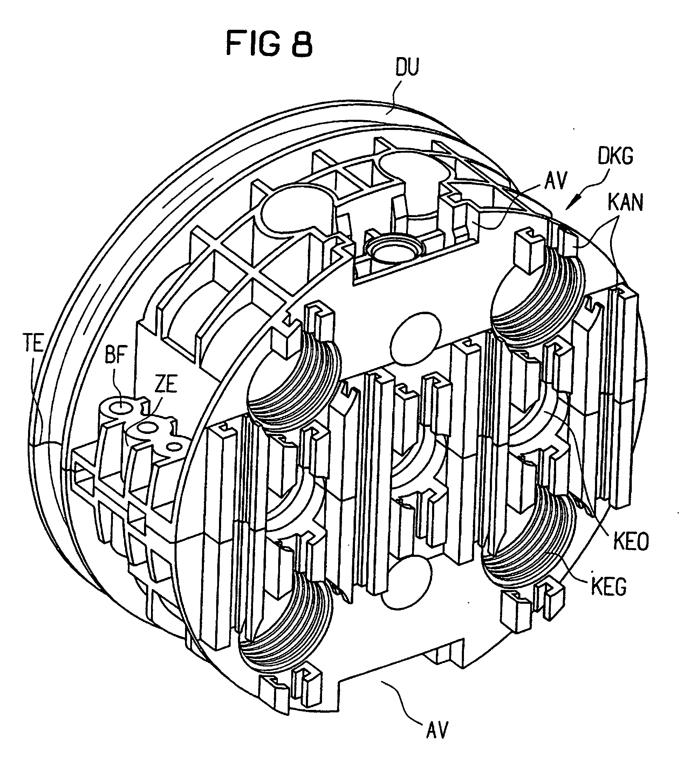

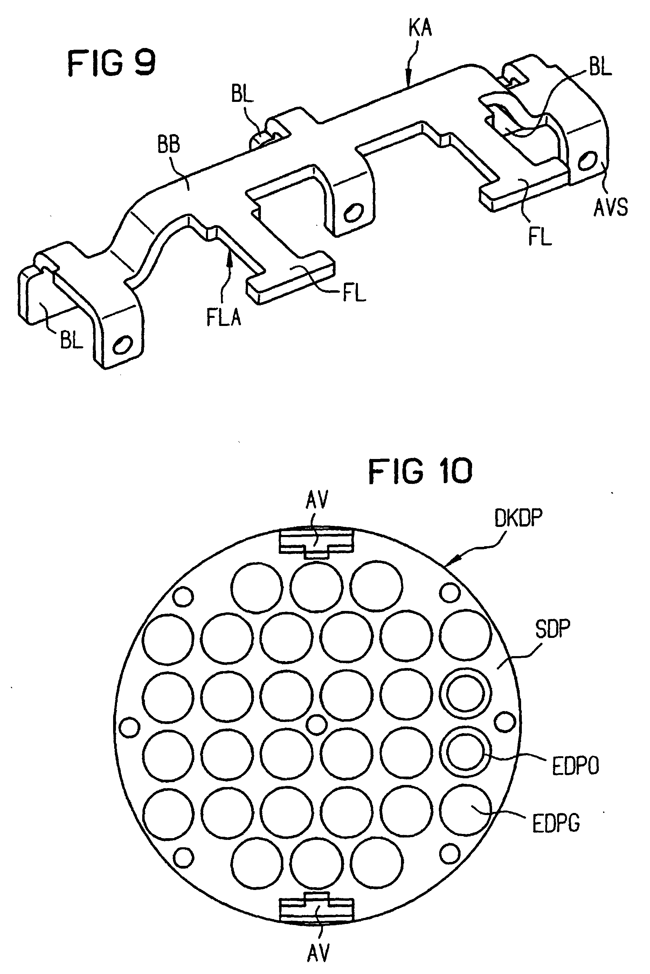

In den Figuren 8 und 9 ist eine Kabelabfangvorrichtung für Dichtkörper der Kabelgarniturfamilie dargestellt, die an der Innenseite des Dichtkörpers DKG angesetzt wird. Die Figur 8 zeigt wieder einen zweigeteilten Dichtkörper DKG, in dessen Trennebene TE Kabeleinführungsöffnungen KEO angeordnet sind. Außerdem sind weitere Kabeleinführungsöffnungen KEG angeordnet, die vorzugsweise außen abgeschlossen sind und nur bei Bedarf geöffnet werden. In den Positionen der Kabeleinführungsöffnungen sind nun bei dieser Version der Kabelabfangvorrichtung Nutansätze KAN angeordnet, in deren Nuten der in Figur 9 dargestellte Einsatz KA der Kabelabfangvorrichtung geführt wird. Dieser Einsatz KA der Kabelabfangvorrichtung besteht aus einem Befestigungsbogen BB an dem Befestigungslaschen BL angeformt sind. Diese Befestigungslaschen BL werden in die Nuten der Ansätze KAN des Dichtkörpers eingeführt und jeweils darin soweit verschoben bis die für die Befestigung der Kabel abstehenden Fixierlaschen FL im Bereich der zu erfassenden Kabel zu liegen kommen. Diese Fixierlaschen FL weisen Aussparungen FLA auf, in denen jeweils ein Spannband geführt wird, mit dem das Kabel eingespannt wird. Auf diese Weise ist für die Kabel jeweils eine Fixierung in Längsrichtung ausreichend gegeben. Weiterhin ist der Befestigungsbogen BB mit Ansätzen AVS versehen, an dem beispielsweise Verbindungsschienen oder Verbindungsleitungen angesetzt werden können, über die dann z.B. eine elektrisch leitende Verbindung aller Kabelabfangvorrichtungen hergestellt werden kann. Aus der Figur 8 ist weiterhin zu erkennen, daß zu beiden Seiten des Zentrierelementes ZE Bohrungen BF für die gegenseitige Befestigung der Dichtungskörperhälften angeordnet sind. Weiterhin ist die umlaufende Dichtungsnut DU zu erkennen. Außerdem sind in den Hälften des Dichtungskörpers DKG Aussparungen AV vorgesehen, in denen Verbindungsschienen zur gegenseitigen Arretierung und Fixierung der sich gegenüberliegenden Dichtungskörper eingesetzt und befestigt werden.

In Figur 10 ist ein Dichtkörper DKDP dargestellt, der sich aus zwei in Achsrichtung hintereinander liegenden stabilen Dichtungsscheiben SDP zusammensetzt, wobei zwischen diesen beiden Dichtungsscheiben SDP eine elastische Dichtungsscheibe angeordnet ist. Diese elastische Dichtungsscheibe kann z.B. alle Einführungsöffnungen wie durch EDPG dargestellt ist überbrücken, so daß jeweils nur die erforderlichen Kabeleinführungsöffnungen ausgeschnitten werden müssen. Dabei erfolgt das Ausschneiden der Kabeleinführungsöffnungen mit geringerem Durchmesser, wie es durch EDPO dargestellt ist, so daß beim Einführen der Kabel eine eng anliegende Lippendichtung gebildet wird. Die elastische Dichtungsplatte kann jedoch auch stutzenförmige Ausbildungen aufweisen, die in den Kabeleinführungsöffnungen der Dichtungsscheiben nach auswärts ragen. Bei Bedarf können dann diese stutzenförmigen Auswölbungen durch Abschneiden geöffnet werden. Weiter sind Aussparungen AV für den Einsatz von Verbindungsschienen angedeutet. Die Ausbildung der Abdichtungen zum Muffenrohr sind hier wegen der Übersichtlichkeit nicht dargestellt; sie entsprechen jedoch den Ausführungen gemäß der Kabelgarniturfamilie.

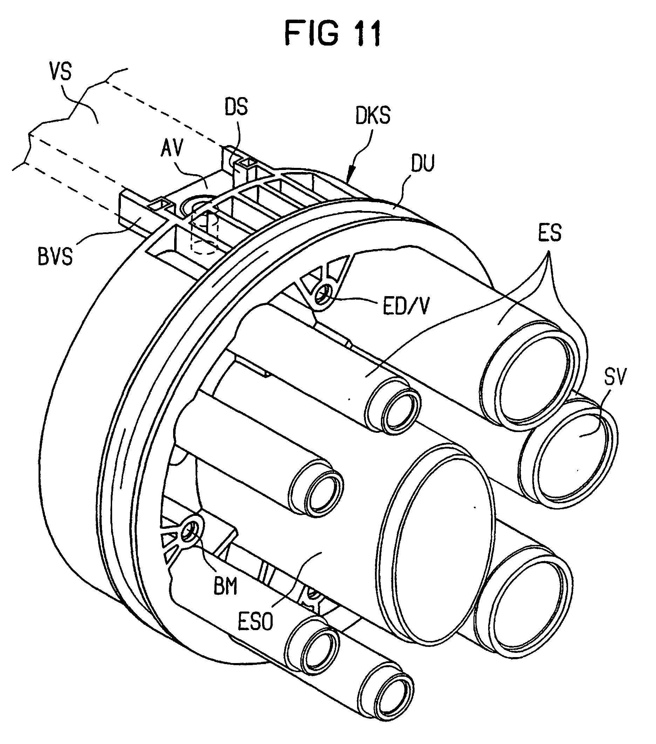

Figur 11 zeigt einen weiteren Dichtkörper mit Funktionseinheiten für den erfindungsgemäßen Einsatz in der Kabelgarniturenfamilie. Dieser Dichtkörper GKS kann mit seiner umlaufenden Dichtungsnut DU in der gleichen Weise in einem Muffenrohr eingesetzt werden. Dabei erfolgt die Kabeleinführung jeweils durch einen nach außen angeformten Einführungsstutzen ES. Diese Einführungsstutzen ES können wiederum mit entsprechenden Verschlußstücken SV abgeschlossen werden, die dann bei Bedarf abgeschnitten oder entnommen werden. Die Kabeleinführungsstutzen ES können zylindrisch oder auch konisch zulaufend ausgebildet sein, wobei bei der letzteren Ausführung gleichzeitig eine entsprechende Anpassung an den jeweiligen Kabeldurchmesser erfolgen kann. Die Abdichtung zwischen den Einführungsstutzen ES und dem jeweils eingeführten Kabel erfolgt beispielsweise mit aufgesetzten Schrumpfschlauchstücken, die nach dem Einführen der Kabel auf die Enden der Einführungsstutzen ES und auf den Kabelmantel aufgeschrumpft werden. In ähnlicher Weise kann der hier gezeigte Dichtkörper DKS mit schrumpfbaren Einführungsstutzen ES versehen werden, so daß die zusätzlichen Schrumpfschlauchstücke entfallen können. Die Einführungsstutzen ES weisen vorzugsweise verschiedenen Durchmesser auf, so daß je nach Kabel bereits eine Vorauswahl getroffen werden kann. In der Mitte des Dichtungskörpers DKS ist in diesem Fall ein elliptischer oder ovaler Einführungsstutzen ESO angeordnet, wobei die Form dieses Einführungsstutzens ESO so gewählt ist, daß ein ungeschnittenes Kabel eingeführt werden kann, wenn dieses U-förmig abgebogen wird. Außerdem ist hier dargestellt, daß Befestigungspunkte BM vorgesehen sind, an denen die Kabelgarnitur an einem Mast oder dergleichen befestigt werden kann. In gleicher Weise können auch Bohrungen ED/V vorgesehen werden, in denen beispielsweise ein Ventil oder eine Erddurchführung eingesetzt werden kann. Außerdem ist auf der Innenseite des Dichtkörpers DKS eine Befestigungsvorrichtung für eine Befestigungsschiene VS dargestellt, wobei in dem vorgesehenen Ausschnitt AV Drehsicherungen DS angeordnet sind. Auf diese Weise kann die hier angedeutete Verbindungsschiene VS dreh- und verwindungssicher befestigt werden. Die Verbindungsschiene VS wird am gegenüberliegenden Dichtkörper ebenfalls verankert, so daß sie zueinander in ihrer Lage fixiert sind.

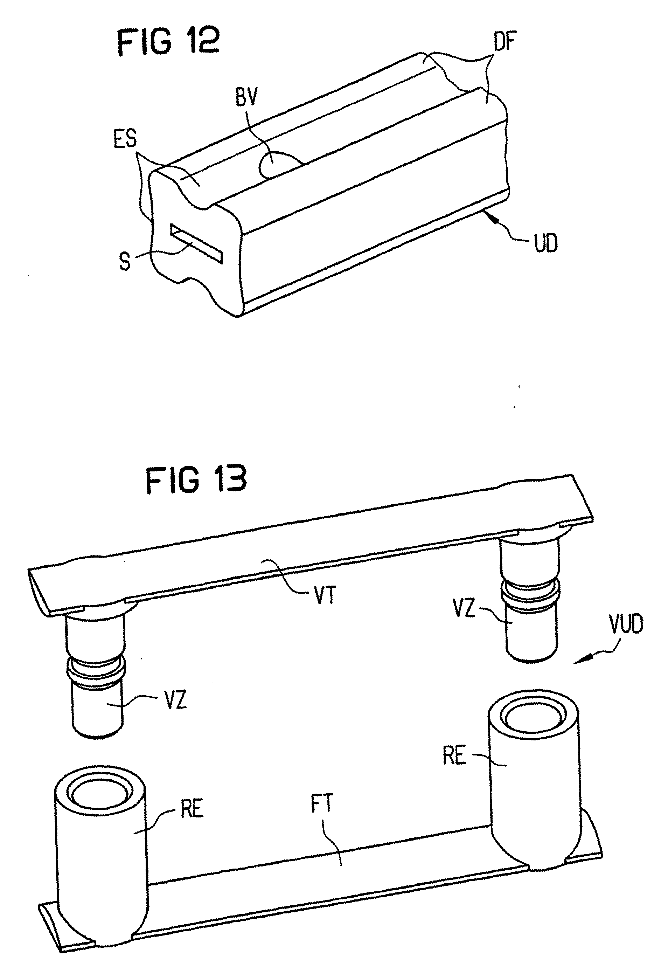

Die Figur 12 zeigt das Ende einer umlaufenden Dichtung UD, die sich von den bisher bekannten Dichtungsprofilen aus geschäumtem Kunststoff unterscheidet. Der Querschnitt dieser neuen Dichtung für den Einsatz in der umlaufenden Dichtungsnut der Dichtkörper weist ein sog. Wellenprofil auf, das dadurch zustande kommt, daß in den längsverlaufenden Flächen der umlaufenden Dichtung UD Einsenkungen ES ausge-bildet sind. Dadurch wird die Dichtfläche jeweils in zwei längsverlaufende Dichtflächen unterteilt, wodurch die Dichtwirkung erhöht wird. Zusätzlich entsteht in den Einsenkungen ES zwischen den Erhebungen ein Speicherraum, in dem die üblicherweise verwendete Gleitpaste geschützt ist. Bei den bisher verwendeten Rundprofilen wird die aufgebrachte Gleitpaste durch die Relativbewegungen des Muffenrohres zum Dichtkörper z.B. durch Temperaturschwankungen abgewischt und sie verliert dadurch ihre Wirkung. Durch das Wellenprofil dieser vorliegenden umlaufenden Dichtung UD wird dieser Effekt vermieden. Für die Montage ist zweckmäßig, die umlaufenden Dichtungen in Querrichtung zu teilen, so daß sie problemlos in die umlaufende Dichtungsnut der Dichtkörper eingelegt werden können. Die sich stoßenden Enden der umlaufenden Dichtung UD werden üblicherweise mit sog. Joinern zusammengehalten. Da dadurch jedoch die Dichtung in diesem Bereich durch den eingeführten Joiner sehr massiv verhärtet erscheint, wirken dort unterschiedliche Kräfte, was zu einer Minderung der Dichtfähigkeit führen kann. Zusätzlich besteht dabei die Gefahr, daß die Dichtung vom Monteur nicht richtig geschlossen wird, oder daß sie sich wieder öffnet. Dies kann zu Undichtigkeiten im Dichtbereich führen. Bei der umlaufenden Dichtung UD für die Kabelgarniturenfamilie der vorliegenden Erfindung wird dies mit einem Verschluß verhindert, wobei dieser ähnlich wie ein Kettenschloß funktioniert. Hierfür sind jedoch an jedem Ende der umlaufenden Dichtung UD Verschlußbohrungen BV vorzusehen, in denen der Verschluß eingesetzt wird. Die vorher für den Einsatz von Joinern erforderlichen Schlitze S könnten damit entfallen.

In Figur 13 wird ein Verbindungselement VUD zur Überbrückung der Trennstelle einer geteilten umlaufenden Dichtung, wie sie in Figur 12 beschrieben ist, dargestellt. Das Verbindungselement VUD besteht aus einem Fixierteil FT mit zwei im Abstand voneinander auf einer Verbindungsschiene angeordneten Rohrelementen RE und aus einem Verschlußteil VT mit in gleichem Abstand angeordneten Zapfen VZ. Bei der Montage dieses Verschlußelementes VUD werden die beiden Rohrelemente RE durch die Bohrungen in den Enden der umlaufenden Dichtung eingeführt. Anschließend wird das Verschlußteil VT von der anderen Seite her aufgesetzt, wobei die Zapfen VZ in die Rohrelemente RE rastend eingedrückt werden. Damit ist die umlaufende Dichtung an ihrer Trennstelle durch das Verbindungselement VUD überbrückt und in der Lage fixiert.

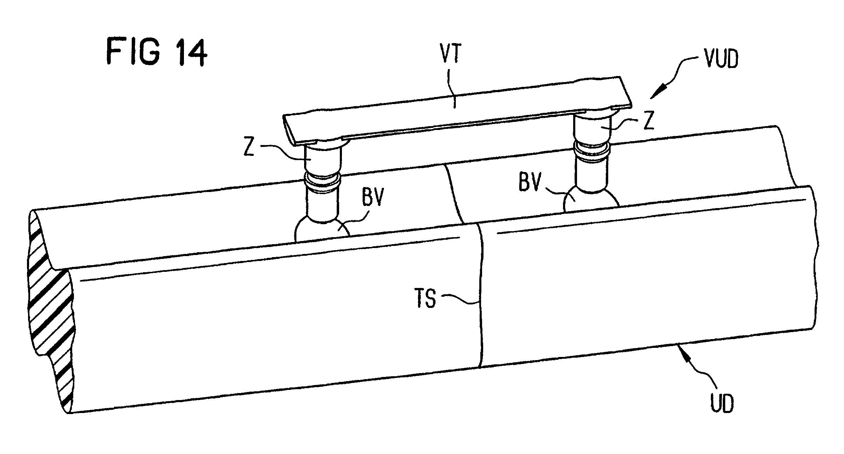

In Figur 14 wird der Vorgang dargestellt, der bei der Montage des Verbindungselementes abläuft wie bereits in Figur 13 beschrieben worden ist.

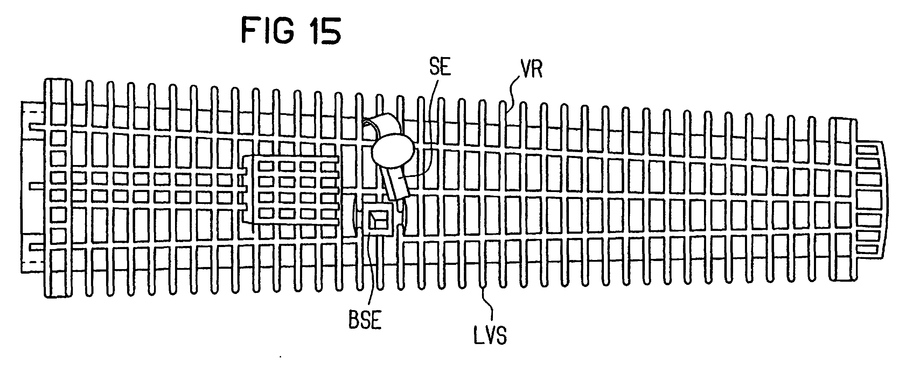

Die Figur 15 zeigt eine Verschlußschiene LVS zum Verschließen der Längsöffnung eines Muffenrohres der Kabelgarniturenfamilie. Die gezeigte Verschlußschiene LVS ist aus Kunststoff gespritzt und weist über die ganze äußere Fläche hinweg Verstärkungsrippen VR auf. Außerdem enthält die Verschlußschiene LVS eine Bohrung BSE, in die ein unverlierbar angehängtes Sicherungselement SE in Form eines Zapfens eingesteckt und in dem darunterliegenden Klemmwulst verrastet wird. Damit ist gesichert, daß sich die Verschlußschiene LVS nicht selbsttätig lösen kann. Die Unterseite der Klemmschine weist eine hinterschnittene, keilförmige längsverlaufende Aufnahmenut auf, in der die Klemmwülste des Muffenrohrs zusammengepreßt werden.

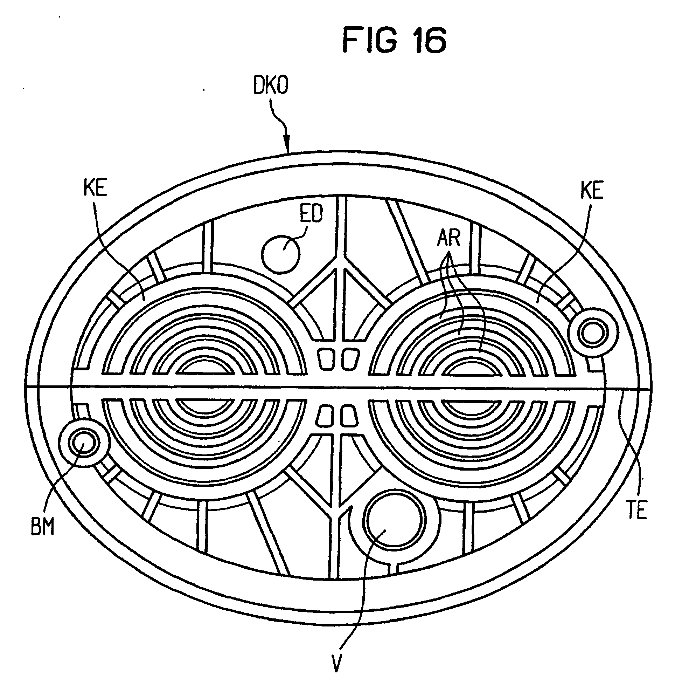

Figur 16 zeigt abschließend noch einen Dichtkörper DKO, der in seiner Grundform oval ausgebildet ist. Hierzu gehört dann ein entsprechend oval geformtes Muffenrohr an dessen Stirnseiten Dichtkörper DKO eingesetzt werden. Damit kann in der Kabelgarniturenfamilie eine Kabelgarniturreihe mit ovalem Querschnitt konzipiert werden. Dabei können alle bisher . kreisrunden Dichtkörper in ovale Form umgesetzt werden, ohne daß sich die Verhältnisse ändern. Derartige Kabelgarnituren werden für Sonderfälle vorgesehen, bei denen die Ausdehnung in einer Richtung beengt ist. Das Erscheinungsbild der Kabelgarniturfamilie bleibt jedoch im großen und ganzen erhalten. Bei diesem Dichtungskörper DKO ist eine weitere Variante für Kabeleinführungsöffnungen dargestellt, die ebenso auch bei kreisrunden Dichtkörpern eingesetzt werden kann. Es handelt sich hierbei um konzentrisch angeordnete, zunächst dicht aneinanderhängende Ringe AR, die je nach Durchmesser des einzuführenden Kabels herausgetrennt werden. Dadurch ergibt sich gegenüber dem Aufbohren des Dichtkörpers eine wesentliche Erleichterung für die Montage. Außerdem sind auch hier Bohrungen und Öffnungen BM, ED und V vorgesehen, durch die bzw. an denen Befestigungsmittel, Erddurchführungen oder Ventile eingesetzt werden können. Auch hier handelt es sich um einen zweigeteilten Dichtkörper DKO in dessen Trennebene TE ein Dichtmittel vor dem Zusammenbau eingelegt wird.

## Patentansprüche

1. Kabelgarnitur aus thermoplastischem Kunststoff, bestehend aus einem längsgeteilten Muffenrohr (MR), Dichtkörpern (DKG, DK, DKDP, DKS, DKO) an den Stirnseiten, einem längsseitig angeordneten Dichtungssystem aus einer entlang der Längskanten verlaufenden Längsnut (DN) und einer gegenüberliegenden Feder (DF), einer Längsdichtung (LD) und einer Klemmschiene, sowie aus umlaufenden Dichtungen (DU) zwischen den Dichtkörpern (DKG, DK, DKDP, DKS, DKO) und dem Muffenrohr (MR), wobei das Muffenrohr (MR) an den Stirnseiten in den umlaufenden Dichtbereichen (DB) Universalaufnahmen aufweist, in denen wahlweise Dichtkörper (DKG, DK, DKDP, DKS, DKO) mit verschiedensten Funktionseinheiten universell einsetzbar sind, wobei die umlaufenden Dichtbereiche aller eine Kabelgarniturenfamilie umfassenden Dichtkörper (DKG, DK, DKDP, DKS, DKO) auf die korrespondierenden Universalaufnahmen des Muffenrohres (MR) abgestimmt sind, wobei die Dichtkörper (DKG, DK, DKDP, DKS, DKO) jeweils eine umlaufende Nut (DU) zur Aufnahme einer umlaufenden Dichtung (UD) aufweisen, **dadurch gekennzeichnet, daß** die Längsnut (DN) in den Kreuzungsbereichen zwischen den umlaufenden Dichtungen (UD) und der Längsdichtung (LD) jeweils eine nach innen zur umlaufenden Dichtung (DU) gerichtete Aussparung (AD) aufweist, in die jeweils ein Ansatz (AS) der Längsdichtung (LD) eintaucht, so daß die jeweilige umlaufende Dichtung (UD) mit der längsseitigen Dichtung (LD) in Berührung steht, und daß die gegenüberliegende Feder (DF) im Bereich der jeweiligen Aussparung (AD) eine Profilierung (P) aufweist, welche Ausweich-Hohlräume ausbildet, in welche die Längsdichtung (LD) im Bereich des jeweiligen Ansatzes (AS) ausweichen kann.

2. Kabelgarnitur nach Anspruch 1, **dadurch gekennzeichnet, daß** der Dichtkörper (DKDP, DKS) in Achsrichtung ungeteilt ist.

3. Kabelgarnitur nach Anspruch 1, **dadurch gekennzeichnet, daß** der Dichtkörper (DKG, DKO) quer zur Achsrichtung in zwei oder drei Dichtungskörperteile geteilt ist, wobei achsial verlaufende Kabeleinführungsöffnungen (KE, KEO) in den Teilungsebenen (TE) angeordnet sind.

4. Kabelgarnitur nach Anspruch 3, **dadurch gekennzeichnet, daß** der Dichtkörper als Funktionseinheit achsial verlaufende Kabeleinführungsöffnungen (KE, KEO, KEG) aufweist.

5. Kabelgarnitur nach Anspruch 2, **dadurch gekennzeichnet, daß** der Dichtkörper (DKDP) aus zwei in Achsrichtung hintereinander liegenden steifen Platten (STP) und einer dazwischen eingebrachten elastischen Scheibe gebildet ist, wobei als Funktionseinheit mehrere in Achsrichtung verlaufende Kabeleinführungsöffnungen angeordnet sind.

6. Kabelgarnitur nach Anspruch 5, **dadurch gekennzeichnet, daß** die zwischen den beiden steifen Scheiben (SDP) eingelagerte elastische Scheibe durch die Kabeleinführungsöffnungen der außen liegenden steifen Platte (SDP) nach auswärts gerichtete, zunächst geschlossene Kegelstümpfe aufweist.

7. Kabelgarnitur nach Anspruch 2, **dadurch gekennzeichnet, daß** der Dichtkörper (DKS) als Funktionseinheit nach auswärts gerichtete, zunächst geschlossene, zylindrische und/oder ovale Einführungsstutzen (ES, ESO) aufweist.

8. Kabelgarnitur nach Anspruch 7, **dadurch gekennzeichnet, daß** Schrumpfschläuche auf den Stutzen (ES, ESO) angeordnet sind.

9. Kabelgarnitur nach einem der vorhergehenden Ansprüche, **dadurch gekennzeichnet, daß** der Dichtkörper (DK) als Funktionseinheit in Achsrichtung verlaufende Kabeleinführungsöffnungen (KEB) aufweist, die mit Hilfe eines Bohrwerkzeuges dem Durchmesser des einzuführenden Kabels entsprechend ausgeschnitten sind.

10. Kabelgarnitur nach einem der vorhergehenden Ansprüche, **dadurch gekennzeichnet, daß** nicht belegte Kabeleinführungsöffnungen (KEG) oder Einführungsstutzen (ES) mit Stopfen und/oder Wandverschlüssen (VS) verschlossen sind.

11. Kabelgarnitur nach einem der vorhergehenden Ansprüche, **dadurch gekennzeichnet, daß** ein Dichtmittel, vorzugsweise ein elastisches oder plastisches Dichtband in der Trennungsebene (TE) zwischen dem eingeführten Kabel und der umlaufenden Dichtfläche der Kabeleinführungsöffnung einsetzbar ist.

12. Kabelgarnitur nach einem der vorhergehenden Ansprüche, **dadurch gekennzeichnet, daß** der Dichtkörper (DKG) aus in Achsrichtung hintereinander liegenden Lamellen (L) gebildet ist, die zumindest am äußeren Umfang in einem Ring gefaßt sind, und daß der Ring eine nach Auswärts gerichtete und der Universalaufnahme des Muffenrohres (MR) angepaßte umlaufende Dichtnut (DU) zur Aufnahme einer umlaufenden Dichtung (UD) aufweist.

13. Kabelgarnitur nach einem der vorhergehenden Ansprüche, **dadurch gekennzeichnet, daß** die Längsdichtung (LD) und/oder die umlaufenden Dichtungen (DU) aus profiliertem Silikonmaterial gebildet sind.

14. Kabelgarnitur nach Anspruch 1, **dadurch gekennzeichnet, daß** die umlaufende Dichtung (UD) einen Rechteckquerschnitt mit abgerundeten Eckkanten und Einsenkungen (ES) in den längsverlaufenden Seitenflächen aufweist.

15. Kabelmuffe nach einem der Ansprüche 1 oder 14, **dadurch gekennzeichnet, daß** die umlaufende Dichtung (UD) quer zu ihrer Achsrichtung geteilt ist und mit einem Verbindungselement (VUD) im montierten Zustand zusammengehalten ist.

16. Kabelgarnitur nach Anspruch 15, **dadurch gekennzeichnet, daß** das Verbindungselement (VUD) aus einem Fixierteil (FT) mit zwei im Abstand voneinander auf einer Verbindungsschiene angeordneten Rohrelementen (RE) und aus einem Verschlußteil (VT) mit in gleichem Abstand voneinander angeordneten Zapfen (VZ) besteht, und daß die Zapfen (VZ) in den Rohrelementen (RE) rastend fixierbar sind, wobei die Rohrelemente (RE) durch korrespondierende Löcher oder Bohrungen (BV) an den Enden der umlaufenden Dichtungen (UD) hindurchgreifen.

17. Kabelgarnitur nach einem der vorhergehenden Ansprüche, **dadurch gekennzeichnet, daß** das Muffenrohr (MR) im offenen Zustand im Querschnitt eine von der Kreisform abweichende Form aufweist, wobei das Muffenrohr (MR) von seinem der Längsöffnung gegenüberliegenden Scheitelpunkt (S) ausgehend eine Zusatzkrümmung (ZS) nach einwärts aufweist, so daß die sich gegenüberliegenden Stoßflächen (SF) der Längskanten beim Schließvorgang des Muffenrohres (MR) plan aufeinander treffen und einen tangentialen Übergang bilden.

18. Kabelgarnitur nach einem der vorhergehenden Ansprüche, **dadurch gekennzeichnet, daß** die Längskanten in Längsrichtung nach auswärts gerichtete und keilförmig verlaufende, hinterschnittene Klemmwülste (KW1, KW2) aufweisen, über die eine keilförmige Verschlußschiene (LVS) aufziehbar ist.

19. Kabelgarnitur nach einem der vorhergehenden Ansprüche, **dadurch gekennzeichnet, daß** der Dichtungskörper (DK, DKG) mit seinen Funktionseinheiten eine Kabelabfangvorrichtung aufweist.

20. Kabelgarnitur nach Anspruch 19, **dadurch gekennzeichnet, daß** mindestens ein Druckplattenpaar (DP) zwischen den Lamellen (L) des Dichtungskörpers (DK) angeordnet ist, und daß das Druckplattenpaar (DP) zu den Kabeleinführungsöffnungen (KEB) korrespondierende Öffnungen aufweist, wobei durch eine Druckvorrichtung (DB) das Druckplattenpaar (DP) auf das eingeführte Kabel fixierbar ist.

21. Kabelgarnitur nach Anspruch 19, **dadurch gekennzeichnet, daß** die Kabelabfangvorrichtung (KA) aus einem Befestigungsbogen (BB) besteht, an dem Fixierlaschen (FL) angeordnet sind, und daß Befestigungslaschen (BL) zur gleitenden Befestigung in Nuten von Kabelabfangansätzen (KAN) auf der Innenseite des Dichtkörpers (DKG) am Befestigungsbogen (BB) angeordnet sind.

22. Kabelgarnitur nach einem der vorhergehenden Ansprüche, **dadurch gekennzeichnet, daß** eine Verbindungsmuffe aus einem Muffenrohr (MR) mit Universalaufnahmen in den Dichtbereichen (DB) und aus an den Stirnseiten angepaßten Dichtkörpern mit gleichen und/oder unterschiedlichen Funktionseinheiten gebildet ist, wobei die Dichtkörper (DK, DKG, DKO) mit Hilfe von Verbindungsschienen (VS) aufeinander ausgerichtet und fixiert sind.

23. Kabelgarnitur nach einem der Ansprüche 1 bis 21, **dadurch gekennzeichnet, daß** eine Haubenmuffe aus einem Muffenrohr (MR) mit Universalaufnahmen und an dessen Stirnseiten angepaßten Dichtkörpern gebildet ist, wobei ein Dichtkörper (DK, DKG, DKO) mit Funktionseinheiten für das Einführen der Kabel versehen ist, und daß der zweite Dichtkörper als geschlossene Abschlußplatte ausgebildet ist, oder dessen Funktionseinheiten verschlossen sind.

24. Kabelgarnitur nach Anspruch 23, **dadurch gekennzeichnet, daß** am Dichtkörper (DK) ein Aufnahmebügel für die Aufnahme von Anschlußund/oder Rangiereinheiten angeordnet ist.

## Claims

1. Cable fitting made of thermoplastic material, comprising a longitudinally divided sleeve tube (MR), sealing bodies (DKG, DK, DKDP, DKS, DKO) on the end sides, a sealing system which is arranged on the longitudinal sides and is made of a longitudinal groove (DN) running along the longitudinal edges and of a tongue (DF) located opposite the groove, and also comprising a longitudinal seal (LD) and a clamping rail, as well as encircling seals (DU) between the sealing bodies (DKG, DK, DKDP, DKS, DKO) and the sleeve tube (MR), it being the case that the sleeve tube (MR) has on the end sides, in the encircling sealing regions (DB), universal mounts in which a selection of sealing bodies (DKG, DK, DKDP, DKS, DKO) with a wide range of different functional units can be inserted universally, the encircling sealing regions of all the sealing bodies (DKG, DK, DKDP, DKS, DKO) covering a family of cable fittings being coordinated with the corresponding universal mounts of the sleeve tube (MR), it being the case that the sealing bodies (DKG, DK, DKDP, DKS, DKO) each have an encircling groove (DU) for accommodating an encircling seal (UD), **characterized in that** the longitudinal groove (DN) in the crossover regions between the encircling seals (UD) and the longitudinal seal (LD) in each case has a cutout (AD) which is directed inwards in relation to the encircling seal (DU) and into which an extension (AS) of the longitudinal seal (LD) penetrates in each case, with the result that the respective encircling seal (UD) is in contact with the longitudinal-side seal (LD), and **in that** the opposite tongue (DF), in the region of the respective cutout (AD), has a profiling (P) which forms yielding cavities into which the longitudinal seal (LD), in the region of the respective extension (AS), can yield.

2. Cable fitting according to Claim 1, **characterized in that** the sealing body (DKDP, DKS) is not divided in the axial direction.

3. Cable fitting according to Claim 1, **characterized in that** the sealing body (DKG, DKO) is divided, transversally to the axial direction, into two or three sealing-body parts, axially running cable-introduction openings (KE, KEO) being arranged in the dividing planes (TE).

4. Cable fitting according to Claim 3, **characterized in that** the sealing body, as functional unit, has axially running cable-introduction openings (KE, KEO, KEG).

5. Cable fitting according to Claim 2, **characterized in that** the sealing body (DKDP) is formed from two rigid plates (SDP), located one behind the other in the axial direction, and an elastic disc introduced therebetween, a plurality of axially running cable-introduction openings being arranged as the functional unit.

6. Cable fitting according to Claim 5, **characterized in that** the elastic disc, which is accommodated between the two rigid discs (SDP), has initially closed truncated cones directed outwards through the cable-introduction openings of the outer rigid plate (SDP).

7. Cable fitting according to Claim 2, **characterized in that** the sealing body (DKS), as functional unit, has outwardly directed, initially closed, cylindrical and/or oval introduction stubs (ES, ESO).

8. Cable fitting according to Claim 7, **characterized in that** heat-shrinkable sleeves are arranged on the stubs (ES, ESO).

9. Cable fitting according to one of the preceding claims, **characterized in that** the sealing body (DK), as functional unit, has axially running cable-introduction openings (KEB) which are cut out with the aid of a drilling tool to correspond to the diameter of the cable which is to be introduced.

10. Cable fitting according to one of the preceding claims, **characterized in that** unoccupied cable-introduction openings (KEG) or introduction stubs (ES) are closed by stoppers and/or wall closures (VS).

11. Cable fitting according to one of the preceding claims, **characterized in that** a sealant, preferably an elastic or plastic sealing band, can be inserted in the separating plane (TE) between the introduced cable and the encircling sealing surface of the cable-introduction opening.

12. Cable fitting according to one of the preceding claims, **characterized in that** the sealing body (DKG) is formed from lamellae (L) which are located one behind the other in the axial direction and are encased in a ring at least on the outer circumference, and **in that** the ring has an outwardly directed encircling sealing groove (DU) which is adapted to the universal mount of the sleeve tube (MR) and is intended for accommodating an encircling seal (UD).

13. Cable fitting according to one of the preceding claims, **characterized in that** the longitudinal seal (LD) and/or the encircling seals (DU) is/are formed from profiled silicone material.

14. Cable fitting according to Claim 1, **characterized in that** the encircling seal (UD) has a rectangular cross section with rounded corner edges and depressions (ES) in the longitudinally running side surfaces.

15. Cable fitting according to either of Claims 1 and 14, **characterized in that** the encircling seal (UD) is divided transversely to its axial direction and, in the installed state, is held together by a connecting element (VUD).

16. Cable fitting according to Claim 15, **characterized in that** the connecting element (VUD) comprises a fixing part (FT), with two tubular elements (RE) spaced apart from one another on a connecting rail, and a closure part (VT) with stubs (VZ) spaced apart from one another by the same distance, and **in that** the stubs (VZ) can be fixed with latching action in the tubular elements (RE), the tubular elements (RE) engaging through corresponding holes or bores (BV) at the ends of the encircling seals (UD).

17. Cable fitting according to one of the preceding claims, **characterized in that**, in the open state, the sleeve tube (MR) is not circular in cross section, the sleeve tube (MR), starting from its vertex (S) located opposite the longitudinal opening, having an additional curvature (ZS) in the inward direction, with the result that the mutually opposite abutment surfaces (SF) of the longitudinal edges come into planar contact with one another, and form a tangential transition, when the sleeve tube (MR) is closed.

18. Cable fitting according to one of the preceding claims, **characterized in that** the longitudinal edges have undercut clamping beads (KW1, KW2) which are directed outwards in the longitudinal direction, run in a wedge-shaped manner and over which a wedge-shaped closure rail (LVS) can be drawn.

19. Cable fitting according to one of the preceding claims, **characterized in that** the sealing body (DK, DKG), with its functional units, has a cable-clamping arrangement.

20. Cable fitting according to Claim 19, **characterized in that** at least one pair of pressure-exerting plates (DP) is arranged between the lamellae (L) of the sealing body (DK), and **in that** the pair of pressure-exerting plates (DP) has openings corresponding to the cable-introduction openings (KEB), it being possible for the pair of pressure-exerting plates (DP) to be fixed onto the introduced cable by a pressure-exerting arrangement (DB).

21. Cable fitting according to Claim 19, **characterized in that** the cable-clamping arrangement (KA) comprises a fastening arc (BB) on which fixing lugs (FL) are arranged, and **in that**, for the sliding fastening in grooves of cable-clamping extensions (KAN) on the inside of the sealing body (DKG), fastening lugs (BL) are arranged on the fastening arc (BB).

22. Cable fitting according to one of the preceding claims, **characterized in that** a connecting sleeve is formed from a sleeve tube (MR) with universal mounts in the sealing regions (DB) and from sealing bodies which are adapted to the end sides and have the same and/or different functional units, the sealing bodies (DK, DKG, DKO) being aligned with one another, and fixed, with the aid of connecting rails (VS).

23. Cable fitting according to one of Claims 1 to 21, **characterized in that** a cover sleeve is formed from a sleeve tube (MR) with universal mounts and sealing bodies adapted to the end sides of said sleeve tube, a sealing body (DK, DKG, DKO) being provided with functional units for the introduction of the cable, and **in that** the second sealing body is designed as a closed termination plate, or the functional units of said sealing body are closed.

24. Cable fitting according to Claim 23, **characterized in that** an accommodating bracket for accommodating connection and/or routing units is arranged on the sealing body (DK).

## Revendications

1. Manchon pour câbles en matière plastique thermoplastique, se composant d'un tube de manchon divisé en longueur (MR), de corps d'étanchéité (DKG, DK, DKDP, DKS, DKO) aux faces d'extrémité, d'un système d'étanchéité disposé en longueur se composant d'une rainure longitudinale (DN) ménagée le long des arêtes longitudinales et d'un tenon opposé (DF), d'une garniture d'étanchéité longitudinale (LD) et d'un rail de serrage, ainsi que de garnitures d'étanchéité périphériques (DU) entre les corps d'étanchéité (DKG, DK, DKDP, DKS, DKO) et le tube de manchon (MR), dans lequel le tube de manchon (MR) présente aux faces d'extrémité des logements universels dans les régions d'étanchéité périphériques (DB), dans lesquels des corps d'étanchéité (DKG, DK, DKDP, DKS, DKO) peuvent être introduits au choix de façon universelle avec des unités fonctionnelles très différentes, dans lequel les régions d'étanchéité périphériques de tous les corps d'étanchéité (DKG, DK, DKDP, DKS, DKO) comprenant une famille de manchons pour câbles sont harmonisés avec les logements universels correspondants du tube de manchon (MR), dans lequel les corps d'étanchéité (DKG, DK, DKDP, DKS, DKO) présentent chacun une rainure périphérique (DU) destinée à recevoir une garniture d'étanchéité périphérique (UD), **caractérisé en ce que** la rainure longitudinale (DN) présente dans les régions de croisement entre les garnitures d'étanchéité périphériques (UD) et la garniture d'étanchéité longitudinale (LD) chaque fois une cavité (AD) orientée vers l'intérieur en direction de la garniture d'étanchéité périphérique (DU), dans laquelle plonge chaque fois un bouton (AS) de la garniture d'étanchéité longitudinale (LD), de telle manière que chaque garniture d'étanchéité périphérique (UD) soit en contact avec la garniture d'étanchéité longitudinale (LD), et que le tenon opposé (DF) présente dans la région de chaque cavité (AD) un profilage (P), qui forme des espaces creux de dégagement, dans lesquels la garniture d'étanchéité longitudinale (LD) peut se loger dans la région du bouton respectif (AS).

2. Manchon pour câbles suivant la revendication 1, **caractérisé en ce que** le corps d'étanchéité (DKDP, DKS) n'est pas divisé en direction axiale.

3. Manchon pour câbles suivant la revendication 1, **caractérisé en ce que** le corps d'étanchéité (DKG, DKO) est divisé transversalement à la direction de l'axe en deux ou trois parties de corps d'étanchéité, des ouvertures d'introduction de câble (KE, KEO) étant disposées en direction axiale dans les plans de séparation (TE).

4. Manchon pour câbles suivant la revendication 3, **caractérisé en ce que** le corps d'étanchéité présente comme unité fonctionnelle des ouvertures d'introduction de câble (KE, KEO, KEG) orientées axialement.

5. Manchon pour câbles suivant la revendication 2, **caractérisé en ce que** le corps d'étanchéité (DKDP) est formé de deux plaques rigides (STP) placées l'une derrière l'autre en direction axiale et d'un disque élastique introduit entre celles-ci, plusieurs ouvertures d'introduction de câble orientées en direction axiale étant disposées comme unité fonctionnelle.

6. Manchon pour câbles suivant la revendication 5, **caractérisé en ce que** le disque élastique inséré entre les deux disques rigides (SDP) présente des troncs de cône d'abord fermés, orientés vers l'extérieur à travers les ouvertures d'introduction de câbles de la plaque rigide (SDP) placée à l'extérieur.

7. Manchon pour câbles suivant la revendication 2, **caractérisé en ce que** le corps d'étanchéité (DKS) présente, comme unité fonctionnelle, des embouts d'introduction (ES, ESO) d'abord fermés, cylindriques et/ou ovales orientés vers l'extérieur.

8. Manchon pour câbles suivant la revendication 7, **caractérisé en ce que** des tuyaux souples rétractables sont disposés sur les embouts (ES, ESO).

9. Manchon pour câbles suivant l'une quelconque des revendications précédentes, **caractérisé en ce que** le corps d'étanchéité (DK) présente comme unité fonctionnelle des ouvertures d'introduction de câbles (KEB) orientées en direction axiale, qui sont usinées à l'aide d'un outil de forage en fonction du diamètre du câble à introduire.

10. Manchon pour câbles suivant l'une quelconque des revendications précédentes, **caractérisé en ce que** des ouvertures d'introduction de câbles (KEG) non occupées ou des embouts d'introduction (ES) non occupés sont obturés avec des bouchons et/ou des tampons de paroi (VS).

11. Manchon pour câbles suivant l'une quelconque des revendications précédentes, **caractérisé en ce qu'**un moyen d'étanchéité, de préférence une bande d'étanchéité élastique ou plastique, peut être insérée dans le plan de séparation (TE) entre le câble introduit et la face d'étanchéité périphérique de l'ouverture d'introduction de câble.

12. Manchon pour câbles suivant l'une quelconque des revendications précédentes, **caractérisé en ce que** le corps d'étanchéité (DKG) est formé de lamelles (L) placées l'une derrière l'autre en direction axiale, qui sont reprises dans un anneau au moins à la périphérie extérieure, et **en ce que** l'anneau présente une rainure d'étanchéité périphérique (DU) orientée vers l'extérieur et adaptée à la réception universelle du tube de manchon (MR), en vue de recevoir une garniture d'étanchéité périphérique (UD).

13. Manchon pour câbles suivant l'une quelconque des revendications précédentes, **caractérisé en ce que** la garniture d'étanchéité longitudinale (LD) et/ou les garnitures d'étanchéité périphériques (DU) sont formées en une matière de silicone profilée.

14. Manchon pour câbles suivant la revendication 1, **caractérisé en ce que** la garniture d'étanchéité périphérique (UD) présente une section transversale rectangulaire avec des arêtes d'angle arrondies et des enfoncements (ES) dans les faces latérales longitudinales.

15. Manchon pour câbles suivant l'une ou l'autre des revendications 1 ou 14, **caractérisé en ce que** la garniture d'étanchéité périphérique (UD) est divisée transversalement à sa direction axiale et est maintenue à l'état monté avec un élément d'assemblage (VUD).

16. Manchon pour câbles suivant la revendication 15, **caractérisé en ce que** l'élément d'assemblage (VUD) se compose d'une pièce de fixation (FT) avec deux éléments de tube (RE) disposés sur un rail d'assemblage à distance l'un de l'autre et d'une pièce de fermeture (VT) avec des tenons (VZ) disposés à la même distance les uns des autres, et **en ce que** les tenons (VZ) peuvent être fixés par emboîtement dans les éléments de tube (RE), les éléments de tube (RE) pénétrant par des trous ou des alésages correspondants (BV) aux extrémités des garnitures d'étanchéité périphériques (UD).

17. Manchon pour câbles suivant l'une quelconque des revendications précédentes, **caractérisé en ce que** le tube de manchon (MR) à l'état ouvert présente en section transversale une forme s'écartant de la forme circulaire, le tube de manchon (MR) présentant, à partir de son point culminant (S) opposé à l'ouverture longitudinale une courbure supplémentaire (ZS) vers l'intérieur, de telle manière que les faces de jonction opposées (SF) des arêtes longitudinales s'appliquent à plat l'une sur l'autre lors de l'opération de fermeture du tube de manchon (MR) et forment une transition tangentielle.

18. Manchon pour câbles suivant l'une quelconque des revendications précédentes, **caractérisé en ce que** les arêtes longitudinales présentent dans le sens longitudinal des bourrelets de serrage (KW1, KW2) en contre-dépouille, en forme de coin et orientés vers l'extérieur, sur lesquels un rail de fermeture (LVS) en forme de coin peut être tiré.

19. Manchon pour câbles suivant l'une quelconque des revendications précédentes, **caractérisé en ce que** le corps d'étanchéité (DK, DKG) avec ses unités fonctionnelles présente un dispositif d'attache de câble.

20. Manchon pour câbles suivant la revendication 19, **caractérisé en ce qu'**au moins une paire de plaques de pression (DP) est disposée entre les lamelles (L) du corps d'étanchéité (DK), et **en ce que** la paire de plaques de pression (DP) présente des ouvertures correspondantes aux ouvertures d'introduction de câble (KEB), la paire de plaques de pression (DP) pouvant être fixée sur le câble introduit par un dispositif de pression (DB).

21. Manchon pour câbles suivant la revendication 19, **caractérisé en ce que** le dispositif d'attache de câble (KA) se compose d'un étrier de fixation (BB) sur lequel sont fixées des pattes de fixation (FL), et **en ce que** des pattes de fixation (BL) sont disposées sur l'étrie de fixation (BB) sur le côté intérieur du corps d'étanchéité (DKG) en vue d'une fixation glissante dans des rainures de supports d'attache de câble (KAN).

22. Manchon pour câbles suivant l'une quelconque des revendications précédentes, **caractérisé en ce qu'**un manchon d'assemblage est formé d'un tube de manchon (MR) avec des logements universels dans les régions d'étanchéité (DB) et de corps d'étanchéité adaptés aux faces d'extrémité avec des unités fonctionnelles identiques et/ou différentes, les corps d'étanchéité (DK, DKG, DKO) étant alignés les uns avec les autres et fixés à l'aide de rails d'assemblage (VS).

23. Manchon pour câbles suivant l'une quelconque des revendications 1 à 21, **caractérisé en ce qu'**un manchon de hotte est formé d'un tube de manchon (MR) avec des logements universels et des corps d'étanchéité adaptés aux faces d'extrémité de celui-ci, un corps d'étanchéité (DK, DKG, DKO) étant pourvu d'unités fonctionnelles pour l'introduction des câbles, et **en ce que** le deuxième corps d'étanchéité présente la forme d'une plaque de fermeture fermée ou ses unités fonctionnelles sont fermées.

24. Manchon pour câbles suivant la revendication 23, **caractérisé en ce qu'**un étrier de réception est disposé sur le corps d'étanchéité (DK) en vue de recevoir des unités de raccordement et/ou de rangement.
